# EUROPÄISCHE PATENTSCHRIFT

(11) **EP 0 445 578 B1**
(45) Veröffentlichungstag und Bekanntmachung des Hinweises auf die Patenterteilung: **26.10.1994**
(21) Anmeldenummer: 91102403.2
(22) Anmeldetag: 20.02.1991
(51) Int. Cl.: C08L 33/02, C08F 220/00

(54) **Formkörper**
Mouldings
Moulages

(30) Priorität: 03.03.1990 DE 4006644; 24.04.1990 DE 4012947
(43) Veröffentlichungstag der Anmeldung: 11.09.1991
(73) Patentinhaber: BASF Aktiengesellschaft, 67063 Ludwigshafen (DE)
(72) Erfinder: Dotzauer, Bernhard, Dr., W-6701 Maxdorf (DE); Beckerle, Wilhelm Friedrich, W-6712 Bobenheim-Roxheim (DE); Denu, Hans-Juergen, W-6840 Lampertheim (DE); Schwartz, Manfred, Dr., W-6700 Ludwigshafen (DE)

(56) Entgegenhaltungen:
- EP-A- 0 426 782
- GB-A- 2 162 525
- US-A- 2 506 537

## Beschreibung

Die vorliegende Erfindung betrifft Platten, die als Hauptbestandteile feinteilige natürliche oder synthetische Materialien sowie Kondensationsprodukte aus hochmolekularen Polycarbonsäuren und mehrwertigen Alkoholen, Alkanolaminen oder mehrwertigen Aminen enthalten.

Platten, die im wesentlichen aus feinteiligen natürlichen oder synthetischen Materialien und Bindemitteln wie Phenolformaldehydharzen, Furfurolharzen, Aminoplasten oder Stärke aufgebaut sind, sind bekannt. So enthält die EP-A 0 123 234 einen Hinweis auf hauptsächlich aus mineralischen Fasern, nichtfasrigen mineralischen Füllstoffen und Stärke aufgebaute Schalldämmplatten, die mit Melamin/Formaldehyd-Harzen beschichtet sind. Nachteilig an diesen Formkörpern ist jedoch, daß entweder ihre Formbeständigkeit unter Einwirkung erhöhter Luftfeuchtigkeit nicht voll zu befriedigen vermag - sie nehmen die Luftfeuchtigkeit auf und verformen sich unter ihrem Eigengewicht - oder daß sie im Lauf der Zeit flüchtige, niedermolekulare Bindemittelbestandteile wie Formaldehyd freisetzen, was insbesondere bei einer Anwendung in geschlossenen Räumen von Nachteil ist.

Der vorliegenden Erfindung lag daher die Aufgabe zugrunde, Platten zur Verfügung zu stellen, die einerseits bei Einwirkung erhöhter Luftfeuchtigkeit eine erhöhte Formbeständigkeit aufweisen und andererseits einen reduzierten oder verschwindenden Anteil an Bindemitteln aufweisen, die aus leichtflüchtigen Ausgangsstoffen aufgebaut sind. Demgemäß wurden die eingangs definierten Platten gefunden, in denen die Kondensationsprodukte aus hochmolekularen Polycarbonsäuren und mehrwertigen Alkoholen, Alkanolaminen oder mehrwertigen Aminen als Bindemittel fungieren.

Die GB-A 2162525 betrifft ein wasserabsorbierendes Mittel und Mischungen aus dem wasserabsorbierenden Mittel mit feinverteiltem Siliciumdioxid, wobei das wasserabsorbierende Mittel erhalten wird durch Vermischen eines Pulvers eines Carboxylgruppen enthaltenden wasserabsorbierenden Harzes mit einem mehrwertigen Alkohol und einem organischen Lösungsmittel sowie anschließendem Erwärmen der Mischung, um das wasserabsorbierende Harzpulver mit dem mehrwertigen Alkohol umzusetzen.

Als feinteilige natürliche synthetische Materialien eignen sich Materialien wie Sande, Kaoline, Schiefermehl, Mineralfasern wie Mineralwolle, Kunststoff-Fasern, z.B. Polypropylenfasern, Cellulosefasern, Glasfasern oder zerkleinertes Holz wie Holzfasern.

Als hochmolekulare Polycarbonsäuren kommen insbesondere polymere Polycarbonsäuren wie Polyacrylsäure, Polymethacrylsäure, Copolymere aus Acryl- und Methacrylsäure oder Copolymere von Acryl- und/oder Methacrylsäure mit anderen Monomeren wie Ester der Acryl- oder Methacrylsäure mit Alkanolen mit 1 bis 24 C-Atomen, Maleinsäure oder Fumarsäure oder anderen Monomeren wie Styrol oder Ethylen in Betracht.

Gut geeignet sind polymere Polycarbonsäuren, die wenigstens 5 jedoch weniger als 50 mol-%, bevorzugt 8 bis 40 mol-%, bezogen auf die die polymeren Polycarbonsäuren konstituierenden Monomeren, an Monomeren einpolymerisiert enthalten, die eine Carboxylgruppe enthalten wie Maleinsäure, Fumarsäure und insbesondere Acryl- oder Methacrylsäure. Diese Polycarbonsäuren können 50 bis 95, bevorzugt 60 bis 92 mol- % mindestens eines Monomeren einpolymerisiert enthalten, das ausgewählt ist aus Styrol, Ethylen und insbesondere Acrylsäure- und Methacrylsäureestern von 1 bis 6 C-Atome enthaltenden Alkanolen.

Diese Polycarbonsäuren weisen in Dimethylformamid (DMF) bei 25°C einen K-Wert von 50 bis 100 auf. Der K-Wert ist eine relative Viskositätszahl eines Polymeren, die in Analogie zur DIN 53 726 bestimmt wird. Er charakterisiert das mittlere Molekulargewicht der polymeren Polycarbonsäure. Gemessen wird hierbei die Fließgeschwindigkeit einer 0,1 gew.-%igen Lösung der polymeren Polycarbonsäure in DMF, relativ zur Fließgeschwindigkeit von reinem DMF.

In vielen Fällen, insbesondere, wenn es sich bei den Kondensationsprodukten um Ester, beispielsweise von niedermolekularen Alkoholen, handelt, werden gute Ergebnisse mit solchen Polycarbonsäuren erzielt, von deren konstituierenden Monomeren in der Regel wenigstens 50 mol-%, bevorzugt wenigstens 90 mol- %, wenigstens eine Carboxylfunktion aufweisen. Diese Polycarbonsäuren sind an sich bekannt. Sie können in untergeordneten Mengen andere Monomere, beispielsweise obengenannten, einpolymerisiert enthalten. Dabei werden vorzugsweise solche hochmolekularen Polycarbonsäuren eingesetzt, die nur aus α,β-monoethylenisch ungesättigten Carbonsäuren in polymerisierter Form aufgebaut sind, insbesondere Polyacrylsäure und Polymethacrylsäure. In vorteilhafter Weise weisen diese polymeren Polycarbonsäuren in Form ihrer Natriummetall-Salze in Wasser bei 25°C einen K-Wert von 90 bis 130 auf. Gemessen wird hierbei die Fließgeschwindigkeit einer 1 gew.-%igen Lösung des Natriummetallsalzes der polymeren Polycarbonsäure in Wasser, relativ zur Fließgeschwindigkeit von reinem Wasser.

Bei den Kondensationsprodukten kann es sich um Ester und/oder Amide handeln.

Für Ester geeignete mehrwertige Alkohole sind u.a. 2-Hydroxymethylbutandiol-1,4, Trimethylolpropan, Glycerin, Glycol, Polyvinylalkohol, Sorbitol, Zucker oder Cellulosederivate. Vorzugsweise werden Trimethylolpropan, Glycerin oder 2-Hydroxymethylbutandiol-1,4 verwendet.

Gute Erfolge werden häufig mit hochmolekularen Polyalkoholen erzielt. Beispiele hierfür sind Homo- und Copolymere, die einfache Ester aus 3 bis 6 C-Atome enthaltenden α,β-monoethylenisch ungesättigten Carbonsäuren wie Acryl- und Methacrylsäure und 2 bis 10 C-Atome enthaltenden mehrwertigen Alkoholen wie 1,4-Butandiol einpolymerisiert enthalten. Als Comonomere kommen vorzugsweise Ester aus 3 bis 6 C-Atome enthaltenden α,β-monoethylenisch ungesättigten Carbonsäuren und 1 bis 10 C-Atome enthaltenden einwertigen Alkoholen in Mengen von 50 bis 95, bevorzugt 70 bis 95 Gew.-%, bezogen auf die Copolymeren in Betracht. Mit Vorteil weisen diese polymeren Polyalkohole in DMF bei 25°C einen K-Wert von 40 bis 80 auf. Der K-Wert bezieht sich hier auf die Fließgeschwindigkeit einer 0,1 gew.-%igen Lösung des polymeren Polyalkohols in DMF, relativ zur Fließgeschwindigkeit von reinem DMF. Ein wesentlicher Vorteil dieser hochmolekularen Polyalkohole liegt in ihrem erhöhten Siedepunkt begründet.

Geeignete Alkanolamine sind insbesondere Verbindungen, die an einer Kohlenwasserstoffkette wenigstens eine Aminogruppe sowie wenigstens eine alkoholische OH-Gruppe tragen. Von besonderer Bedeutung sind Di- und Triethanolamin. Als mehrwertige Amine kommen insbesondere Diamine wie Ethylendiamin oder Tetramethylendiamin in Betracht.

Die Herstellung der erfindungsgemäßen Platten erfolgt zweckmäßigerweise dadurch, daß die feinteiligen natürlichen oder synthetischen Materialien zunächst durch mechanisches Mischen mit einem wäßrigen Gemisch eines Bindemittels versetzt werden. Das Gemisch enthält wenigstens eine hochmolekulare Polycarbonsäure und wenigstens ein mehrwertiges Amin, Alkanolamin oder einen mehrwertigen Alkohol im allgemeinen in gelöster oder dispers verteilter Form. Dabei kann die Menge der Summe dieser Stoffe im Gemisch je nach Anwendung in weiten Bereichen, im allgemeinen zwischen 0,05 und 40 Gew.-%, teilweise bis 50 Gew.-%, bezogen auf das wäßrige Gemisch, variiert werden. Für Beschichtungen sind dabei je nach Viskosität Konzentrationen von mehr als 5 Gew.-% vorteilhaft. Diese Bindemittelgemische sind normalerweise noch länger als ein Monat nach ihrer Herstellung verarbeitbar. Anschließend wird üblicherweise das überschüssige Bindemittel abgetrennt (z.B. durch Absaugen oder Abpressen), die entstandene breiartige Masse geformt und sodann bei einer Temperatur von 100 bis 250°C getrocknet, wobei mit der Trocknung als Kondensationsreaktion eine Veresterung oder Amidbildung einhergeht, die durch Trocknen unter Druck begünstigt wird. Die hochmolekularen Polycarbonsäuren und die mehrwertigen Alkohole, Alkanolamine und mehrwertigen Amine werden dabei vorzugsweise in solchen Mengen eingesetzt, daß die Anzahl der Säurefunktionen zur Gesamtzahl aus alkoholischen Hydroxyl- und Aminfunktionen im Verhältnis von 4:1 bis 1:4, vorzugsweise 2:1 bis 1:2 steht. Äquivalenz, d.h. ein Verhältnis von 1:1, ist besonders vorteilhaft.

Polymere Polycarbonsäuren, die wenigstens 5 jedoch weniger als 50 mol-%, bezogen auf die die polymeren Polycarbonsäuren konstituierenden Monomeren, an Monomeren einpolymerisiert enthalten, die eine Carboxylgruppe enthalten, sind in der Regel unter Normalbedingungen in Wasser nicht löslich und werden deshalb als wäßrige Polymerisatdispersion eingesetzt. Diese sind in an sich bekannter Weise erhältlich, z.B. durch radikalische Emulsionspolymerisation. Das Gleiche gilt üblicherweise für polymere Polyalkohole, die, bezogen auf die sie konstituierenden Monomeren, weniger als 75 mol-% an Monomeren einpolymerisiert enthalten, die eine alkoholische OH-Gruppe aufweisen.

Bezogen auf die Gesamtmasse der Formkörper beträgt der Bindemittelanteil (gerechnet als Trockenmasse) vorzugsweise 0,5 bis 15 Gew.-%, wobei die Wasseraufnahmefähigkeit des Bindemittels im getrockneten Zustand üblicherweise bei weniger als 5 Gew.-%, bezogen auf die Bindemitteltrockenmasse, liegt.

In einer alternativen Herstellungsweise werden, beispielsweise durch Pressen der feinteiligen natürlichen oder synthetischen Materialien, vorgeformte Platten mit den wenigstens eine hochmolekulare Polycarbonsäure und wenigstens ein mehrwertiges Amin, Alkanolamin oder einen mehrwertigen Alkohol im allgemeinen in gelöster oder dispers verteilter Form enthaltenden wäßrigen Gemischen beschichtet und dann getrocknet. Unter Beschichten sollen auch Arbeitsgänge wie Imprägnieren, Bedüsen und Tauchen verstanden werden, die die Gemische auf die Oberfläche Platten bringen. Auf entsprechende Art und Weise können auch Grundplatten, die aus natürlichen oder synthetischen feinteiligen Materialien und anderen Bindemitteln, z.B. Stärke, aufgebaut sind, durch Beschichten mit den Kondensationsprodukten und Trocknen veredelt werden.

Vorzugsweise werden die erfindungsgemäßen Platten in flächiger Form hergestellt und z.B. als Deckenplatten in Feuchträumen eingesetzt. Sie zeichnen sich durch eine reduzierte Wasseraufnahme, eine erhöhte innere Festigkeit und daraus resultierend, durch eine erhöhte Formbeständigkeit aus.

Gegebenenfalls ist es zweckmäßig, bei der Herstellung der aus den feinteiligen Materialien und dem wäßrigen Bindemittel zusammengesetzten Ausgangsbreis handelsübliche Flockungsmittel, z.B. Mischpolymerisate aus 70 Gew.-% Acrylamid und 30 Gew.-% Diethylaminoethylacrylat oder wasserabstoßende Hilfsmittel wie Stearyldiketen oder Polysiloxane oder andere übliche Hilfsmittel, z.B. eine wäßrige Aluminiumsulfatlösung als Fällungsmittel, miteinzuarbeiten.

Die in den folgenden Beispielen angegebenen Prozente und Teile beziehen sich, wenn nicht anders angegeben, auf das Gewicht.

### Beispiele

### Untersuchung verschiedener erfindungsgemäßer Formkörper F1 bis F17

a) Bestimmung der Formbeständigkeit
Durch Abschleifen der bei der Herstellung der Formkörper (die nachfolgend näher beschrieben wird) dem Sieb abgewandten Seite wurden Prüfkörper hergestellt, die folgende Maße aufwiesen:

| | |
|---|---|
| Länge | 250 mm |
| Breite | 50 mm und |
| Höhe | 15 mm. |

Die so erhaltenen Prüfkörper wurden in einem Feuchtraum bei einer Temperatur von 38°C und 99 % relativer Luftfeuchtigkeit flachseitig, jeweils nur nahe den 50 mm breiten Endkanten, waagrecht aufgelegt und in ihrem geometrischen Mittelpunkt mit einem Gewicht der Masse 1 kg belastet. Nach einer bestimmten Belastungsdauer wurde im entlasteten Zustand die Durchbiegung des Prüfkörpers (Absenkung des Mittelpunktes relativ zur Ausgangsposition) gemessen.
b) Festigkeit
Prüfkörper mit den Maßen

| | |
|---|---|
| Länge | 17 cm |
| Breite | 2 cm und |
| Höhe | 2 cm |

werden unter Normalbedingungen, jeweils nur nahe den Endkanten der Breitseite waagrecht aufgelegt und in ihrer geometrischen Mitte mit einer kontinuierlich zunehmenden Kraft belastet. Die beim Bruch anliegende Kraft ist ein Maß für die Festigkeit.
c) Reißkraft
Die Reißkraft wurde nach DIN 53455 ermittelt.
- F1:: In einer Mischung aus 5 kg Wasser, 360 g Polyacrylsäure (K-Wert des Na-Salzes bei 25°C in Wasser = 110), 140 g 2-Hydroxymethylbutandiol-1,4 und 9,2 g eines Polysiloxans wurden 250 g Mineralwolle eingerührt.
Anschließend wurden als Flockungsmittel 4 g einer 10 gew.-%igen wäßrigen Lösung eines handelsüblichen Mischpolymerisats aus 70 Gew.-% Acrylamid und 30 Gew.-% Diethylaminoethylacrylat zugesetzt. Danach wurden 20 % des erhaltenen Breis in einem Siebkasten (Siebfläche 25 cm x 5 cm) gleichmäßig verteilt und durch Anlegen eines geringfügigen Unterdruckes bei gleichzeitigem Pressen mit einer aufgelegten Lochplatte (25 cm x 5 cm, 0,1 bar) grob entwässert, so daß eine feuchte Rohplatte mit einer Dicke von 18 mm und einem Wassergehalt von 40 bis 80 Gew.-% erhalten wurde. Diese wurde im Umlufttrockenschrank bei 180°C getrocknet.
Formbeständigkeit = 1 mm Absenkung nach 260 h
- F2:: Wie F1, jedoch wurden zusätzlich zur Mineralwolle noch 100 g Kaolin eingesetzt.
Formbeständigkeit = keine meßbare Absenkung nach 360 h
- F3:: Wie F1, jedoch wurden als mehrwertiger Alkohol 150 g Trimethylolpropan eingesetzt.
Formbeständigkeit = 3 mm Absenkung nach 56 h
- F4:: Wie F1, jedoch wurden als mehrwertiger Alkohol 128 g Glycerin eingesetzt.
Formbeständigkeit = 3 mm Absenkung nach 120 h
- F5:: Eine handelsübliche 16 mm dicke Mineralfaserplatte, die als Bindemittel Stärke enthielt, wurde als Formgrundkörper mit einer wäßrigen Lösung aus 36 g Polyacrylsäure (K-Wert des Na-Salzes bei 25°C in Wasser = 110) und 14 g 2-Hydroxymethylbutandiol-1,4 in 200 g Wasser durch Auftrag mit dem Pinsel auf der Dekorseite beschichtet (Auftragsmenge 100 g Trockenmasse/m²) und 15 min bei 150°C im Umlufttrockenschrank getrocknet. Anschließend wurde daraus ein Prüfkörper mit den Maßen
250 mm x 50 mm x 16 mm
zugeschnitten und wie beschrieben auf Formbeständigkeit geprüft. Anschließend wurde der Versuch mit dem nicht beschichteten Formgrundkörper wiederholt.
Formbeständigkeit = Bruch nach 21 h (unbeschichtet) 1 mm Absenkung nach 192 h (beschichtet)
- F6:: Wie F5, jedoch wurde als mehrwertiger Alkohol eine Mischung aus 6,2 g Glycerin und 7,4 g Trimethylolpropan eingesetzt.
Formbeständigkeit = 2 mm Absenkung nach 154 h
- F7:: 96 g feinteilige Holz- und Cellulosefasern, 24 g feinteilige Polypropylenfasern, 3 l Wasser, 180 g Polyacrylsäure (K-Wert des Na-Salzes bei 25°C in Wasser = 110) und 45 g Trimethylolpropan wurden zu einem Faserbrei vermengt, in welchen zusätzlich 24 g einer 8 gew.-%igen wäßrigen Emulsion von Stearyldiketen und 4 g einer 10 gew.-%igen wäßrigen Lösung eines handelsüblichen Mischpolymerisates aus 70 Gew.-% Acrylamid und 30 Gew.-% Diethylaminoethylacrylat in der genannten Abfolge eingerührt wurden. Danach wurde die Masse in einem Siebkasten (25 cm x 25 cm) gleichmäßig verteilt und, wie bei F1 beschrieben, grob entwässert. Die so erhaltene Rohplatte wurde zusätzlich in einem Mikrowellenherd auf einen Restwassergehalt von 15 Gew.-% vorgetrocknet. Anschließend wurde in einer beheizten Presse bei 20°C unter einem Druck von 50 kp/cm² endgetrocknet. Die Preßdauer betrug 90 s.
Reißkraft: 12 N/mm²
- F8:: Wie F7, jedoch wurden als mehrwertiger Alkohol 38 g Glycerin eingesetzt.
Reißkraft: 9,5 N/mm²
- F9:: 50 g feinteilige Holzfasern wurden mit 19 g einer 8 gew.-%igen wäßrigen Emulsion von Stearyldiketen verrührt und anschließend bei 120°C 15 min getrocknet. Anschließend wurde eine Lösung von 8 g Polyacrylsäure (K-Wert des Na-Salzes bei 25°C in Wasser = 110) und 3 g 2-Hydroxymethylbutandiol-1,4 in 40 g Wasser eingerührt. Danach wurde wieder bei 120°C 15 min getrocknet und die Masse in einer Form (20 cm x 20 cm) bei 220°C und 50 kp/cm² 90 s in einer beheizten Presse gepreßt. Es wurden Faserplatten einer Stärke von 4 mm erhalten.
Reißkraft: 8,5 N/mm²
- F10:: Eine Lösung von 58 g Polyacrylsäure (K-Wert des Na-Salzes bei 25°C in Wasser = 110) und 21 g 2-Hydroxymethylbutandiol-1,4 in 200 g Wasser wurde mit 1400 g Normsand (gemäß DIN 1164 Teil 7) verrührt und eine Form (17 cm x 2 cm x 2 cm) mit diesem Gemisch unter Verdichten gefüllt. Anschließend wurde 2 h bei 180°C getrocknet.
Festigkeit: 10,7 kg/cm²
- F11:: In eine Mischung aus 7 kg Wasser, 40,2 g einer handelsüblichen 30 gew.-%igen wäßrigen Polymerisatdispersion eines polymeren Polyalkohols, der in polymerisierter Form aus 80 Gew.-Teilen Methylmethacrylat und 20 Gew.-Teilen Hydroxypropylacrylat aufgebaut war (K-Wert bei 25°C in DMF = 50), 20,1 g einer handelsüblichen 40 gew.-%igen wäßrigen Polymerisatdispersion einer polymeren Polycarbonsäure, die in polymerisierter Form aus 60 Gew.-Teilen Methylmethacrylat, 30 Gew.-Teilen n-Butylacrylat und 10 Gew.-Teilen Methacrylsäure aufgebaut war (K-Wert bei 25°C in DMF = 70) und 16 g eines Polysiloxans wurden 250 g Mineralwolle eingerührt.
Anschließend wurden als Flockungsmittel 4 g einer 10 gew.-%igen wäßrigen Lösung eines handelsüblichen Mischpolymerisats aus 70 Gew.-% Acrylamid und 30 Gew.-% Diethylaminoethylacrylat zugesetzt. Danach wurden 20 % des erhaltenen Breis in einem Siebkasten (Siebfläche 25 cm x 5 cm) gleichmäßig verteilt und durch Anlegen eines geringfügigen Unterdruckes bei gleichzeitigem Pressen mit einer angelegten Lochplatte (25 cm x 5 cm, 0, 1 bar) grob entwässert, so daß eine feuchte Rohplatte mit einer Dicke von 18 mm und einem Wassergehalt von 40 bis 80 Gew.-% erhalten wurde. Diese wurde im Umlufttrockenschrank bei 180°C getrocknet.
Formbeständigkeit = 2 mm Absenkung nach 213 h
- F12:: Wie F11, jedoch wurden anstelle der wäßrigen Dispersion des polymeren Polyalkohols eine Lösung von 3,15 g Trimethylolpropan in 28 g Wasser eingesetzt.
Formbeständigkeit = 4 mm Absenkung nach 128 h
- F13:: Eine handelsübliche 16 mm dicke Mineralfaserplatte, die als Bindemittel Stärke enthielt, wurde als Formgrundkörper mit einer wäßrigen Mischung aus 500 g einer handelsüblichen 30 gew.-%igen wäßrigen Polymerisatdispersion einer polymeren Polycarbonsäure, die in polymerisierter Form aus 70 Gew.-Teilen Methylmethacrylat und 30 Gew.-Teilen Methacrylsäure aufgebaut war (K-Wert bei 25°C in DMF = 70), und 500 g einer handelsüblichen 30 gew.-%igen wäßrigen Polymerisatdispersion eines polymeren Polyalkohols, der in polymerisierter Form aus 80 Gew.-Teilen Methylmethacrylat und 20 Gew.-Teilen Hydroxypropylacrylat aufgebaut war (K-Wert bei 25°C in DMF = 50), durch Auftrag mit dem Pinsel auf der Dekorseite beschichtet (Auftragsmenge 100 g Trockenmasse/m²) und 15 min bei 150°C im Umlufttrockenschrank getrocknet. Anschließend wurde daraus ein Prüfkörper mit den Maßen
25 mm x 50 mm x 16 mm
zugeschnitten und wie beschrieben auf Formbeständigkeit geprüft. Anschließend wurde der Versuch mit dem nicht beschichteten Formgrundkörper wiederholt.
Formbeständigkeit = Bruch nach 24 h (unbeschichtet)
3 mm Absenkung nach 271 h (beschichtet)
- F14:: Wie F13, jedoch wurde anstelle der wäßrigen Dispersion des polymeren Polyalkohols eine Lösung von 4,5 g Diethanolamin in 350 g Wasser eingesetzt.
Formbeständigkeit = 3 mm Absenkung nach 220 h
- F15:: 90 g feinteilige Holz- und Cellulosefasern, 20 g feinteilige Polypropylenfasern, 8 l Wasser, 12 g einer handelsüblichen 30 gew.-%igen wäßrigen Polymerisatdispersion einer polymeren Polycarbonsäure, die in polymerisierter Form aus 80 Gew.-Teilen Methylmethacrylat und 20 Gew.-Teilen Methacrylsäure aufgebaut war (K-Wert bei 25°C in DMF = 70), und 8 g einer handelsüblichen 30 gew.-%igen wäßrigen Polymerisatdispersion eines polymeren Polyalkohols, der in polymerisierter Form aus 90 Gew.-Teilen Methylmethacrylat und 10 Gew.-Teilen Hydroxypropylacrylat aufgebaut war (K-Wert bei 25°C in DMF = 50), wurden zu einem Faserbrei vermengt, in welchen zusätzlich 25 g einer 10 gew.-%igen wäßrigen Aluminiumsulfatlösung und 4 g eines handelsüblichen Mischpolymerisats aus 70 Gew.-% Acrylamid und 30 Gew.-% Diethylaminoethylacrylat eingerührt wurden. Danach wurde die Masse in einem Siebkasten (25 cm x 25 cm) gleichmäßig verteilt und, wie bei F11 beschrieben, grob entwässert. Die so erhaltene Rohplatte wurde zusätzlich in einem Mikrowellenherd auf einen Restwassergehalt von 15 Gew.-% vorgetrocknet. Anschließend wurde in einer beheizten Presse bei 20°C unter einem Druck von 50 kp/cm² endgetrocknet. Die Preßdauer betrug 30 s.
Reißkraft: 11,5 N/mm²
- F16:: Wie F15, jedoch wurde anstelle der wäßrigen Dispersion des polymeren Polyalkohols eine Lösung von 0,1 g Triethanolamin in 6 g Wasser eingesetzt.
Reißkraft: 8,5 N/mm²
- F17:: 50 g feinteilige Holzfasern wurden mit 19 g einer 8 gew.-%igen wäßrigen Emulsion von Stearyldiketen verrührt und anschließend bei 120°C 15 min getrocknet. Anschließend wurde eine Mischung aus 4 g einer handelsüblichen 40 gew.-%igen wäßrigen Polymerisatdispersion einer polymeren Polycarbonsäure, die in polymerisierter Form aus 60 Gew.-Teilen Methylmethacrylat, 30 Gew.-Teilen n-Butylacrylat und 10 Gew.-Teilen Methacrylsäure aufgebaut war (K-Wert bei 25°C in DMF = 70) und 2 g einer handelsüblichen 30 gew.-%igen wäßrigen Polymerisatdispersion eines polymeren Polyalkohols, der in polymerisierter Form aus 90 Gew.-Teilen Methylmethacrylat und 10 Gew.-Teilen Hydroxypropylacrylat aufgebaut war (K-Wert bei 25°C in DMF = 50), eingerührt. Danach wurde wieder bei 120°C 15 min getrocknet und die Masse in einer Form (20 cm x 20 cm) bei 220°C und 50 kp/cm² 90 s in einer beheizten Presse gepreßt. Es wurden Faserplatten einer Größe von 4 mm erhalten.
Reißkraft: 10 N/mm²

## Patentansprüche

1. Platten, die als Hauptbestandteile feinteilige natürliche oder synthetische Materialien sowie Kondensationsprodukte aus hochmolekularen Polycarbonsäuren und mehrwertigen Alkoholen, Alkanolaminen oder mehrwertigen Aminen enthalten.

2. Platten nach Anspruch 1, die, bezogen auf das Gesamtgewicht, 0,5 bis 15 Gew.-% an Kondensationsprodukten aus hochmolekularen Polycarbonsäuren und mehrwertigen Alkoholen, Alkanolaminen oder mehrwertigen Aminen enthalten.

3. Platten nach den Ansprüchen 1 oder 2, die solche Kondensationsprodukte enthalten, bei deren Kondensationsreaktion die hochmolekularen Polycarbonsäuren und die mehrwertigen Alkohole, Alkanolamine oder mehrwertigen Amine in solchen Mengen eingesetzt werden, daß die Anzahl der Säurefunktion der Gesamtzahl aus alkoholischen Hydroxyl- und Aminfunktionen äquivalent ist.

4. Platten nach den Ansprüchen 1 bis 3, die Kondensationsprodukte von solchen polymeren Polycarbonsäuren enthalten, die wenigstens 5 jedoch weniger als 50 mol-%, bezogen auf die die polymeren Polycarbonsäuren konstituierenden Monomeren, an Monomeren einpolymerisiert enthalten, die eine Carboxylgruppe enthalten.

5. Platten nach Anspruch 4, wobei die Polycarbonsäuren in Dimethylformamid bei 25°C einen K-Wert von 50 bis 100 aufweisen.

6. Platten nach den Ansprüchen 1 bis 5, die Kondensationsprodukte aus hochmolekularen Polycarbonsäuren und solchen polymeren Polyalkoholen, deren K-Wert bei 25°C in Dimethylformamid 40 bis 80 beträgt, enthalten.

7. Platten nach den Ansprüchen 1 bis 5, die Kondensationsprodukte aus hochmolekularen Polycarbonsäuren und Trimethylolpropan, Glycerin, 2-Hydroxymethylbutandiol-1,4, Diethanolamin, Triethanolamin, Ethylendiamin oder Tetramethylendiamin enthalten.

8. Platten nach den Ansprüchen 1 bis 3, die Kondensationsprodukte von solchen polymeren Polycarbonsäuren enthalten, die wenigstens 50 mol-% an Monomeren einpolymerisiert enthalten, die eine Carboxylgruppe aufweisen.

9. Platten nach Anspruch 8, die Kondensationsprodukte von solchen polymeren Polycarbonsäuren enthalten, deren Natriumsalze in Wasser bei 25°C einen K-Wert von 90 bis 130 haben.

10. Platten nach Anspruch 9, die solche Kondensationsprodukte enthalten, deren alkoholische Komponente Trimethylolpropan, Glycerin oder 2-Hydroxymethylbutandiol-1,4 ist.

11. Verfahren zur Herstellung von Platten gemäß den Ansprüchen 1 bis 10, dadurch gekennzeichnet, daß man die feinteiligen natürlichen oder synthetischen Materialien zunächst durch mechanisches Mischen mit einem wäßrigen Gemisch, das wenigstens eine hochmolekulare Polycarbonsäure und wenigstens ein mehrwertiges Amin, Alkanolamin oder einen mehrwertigen Alkohol enthält, als Bindemittel versetzt, anschließend das überschüssige Bindemittel abtrennt, die entstandene Masse formt und sie dann bei einer Temperatur von 100 bis 250°C trocknet.

12. Verfahren zur Herstellung von Platten gemäß den Ansprüchen 1 bis 10, dadurch gekennzeichnet, daß man Grundplatten, die aus natürlichen oder synthetischen feinteiligen Materialien und Bindemitteln aufgebaut sind, mit einem wenigstens eine hochmolekulare Polycarbonsäure und wenigstens ein mehrwertiges Amin, Alkanolamin oder einen mehrwertigen Alkohol enthaltenden wäßrigen Gemisch beschichtet und dann bei 100 bis 250°C trocknet.

13. Verwendung von Platten gemäß den Ansprüchen 1 bis 10 oder hergestellt gemäß den Ansprüchen 11 oder 12 als Deckenplatten.

## Claims

1. A panel which contains, as the principal components, finely divided natural or synthetic materials and condensates of high molecular weight polycarboxylic acids and polyhydric alcohols, alkanolamines or polyamines.

2. A panel as claimed in claim 1, which contains from 0.5 to 15% by weight, based on the total weight, of condensates of high molecular weight polycarboxylic acids and polyhydric alcohols, alkanolamines or polyamines.

3. A panel as claimed in claim 1 or 2, which contains condensates during whose condensation reaction the high molecular weight polycarboxylic acids and the polyhydric alcohols, alkanolamines or polyamines are used in amounts such that the number of acid functions is equivalent to the total number of alcoholic hydroxyl and amine functions.

4. A panel as claimed in any of claims 1 to 3, which contains condensates of polymeric polycarboxylic acids which contain not less than 5 but less than 50 mol%, based on the monomers constituting the polymeric polycarboxylic acids, of polymerized monomers which possess a carboxyl group.

5. A panel as claimed in claim 4, the polycarboxylic acids have a K value of from 50 to 100 in dimethylformamide at 25°C.

6. A panel as claimed in any of claims 1 to 5, which contains condensates of high molecular weight polycarboxylic acids and polymeric polyalcohols whose K value is from 40 to 80 at 25°C in dimethylformamide.

7. A panel as claimed in any of claims 1 to 5, which contains condensates of high molecular weight polycarboxylic acids and trimethylolpropane, glycerol, 2-hydroxymethylbutane-1,4-diol, diethanolamine, triethanolamine, ethylenediamine or tetramethylenediamine.

8. A panel as claimed in any of claims 1 to 3, which contains condensates of polymeric polycarboxylic acids which contain not less than 50 mol% of polymerized monomers which have a carboxyl group.

9. A panel as claimed in claim 8, which contains condensates of polymeric polycarboxylic acids whose sodium salts have a K value of from 90 to 130 in water at 25°C.

10. A panel as claimed in claim 9, which contains condensates whose alcoholic component is trimethylolpropane, glycerol or 2-hydroxymethylbutane-1,4-diol.

11. A process for the production of a panel as claimed in any of claims 1 to 10, wherein an aqueous mixture which contains one or more high molecular weight polycarboxylic acids and one or more polyamines, alkanolamines or polyhydric alcohols is first added to the finely divided natural or synthetic materials as a binder by mechanical mixing, the excess binder is separated off and the resulting material is then molded and dried at from 100 to 250°C.

12. A process for the production of a panel as claimed in any of claims 1 to 10, wherein the basic panel, which is composed of natural or synthetic finely divided materials and a binder, is coated with an aqueous mixture containing one or more high molecular weight polycarboxylic acids and one or more polyamines, alkanolamines or polyhydric alcohols, and is then dried at from 100 to 250°C.

13. The use, as a ceiling panel, of a panel as claimed in any of claims 1 to 10 or produced as claimed in claim 11 or 12.

## Revendications

1. Plaques qui contiennent, à titre de constituants principaux, des matériaux naturels ou synthétiques, finement divisés, ainsi que des produits de condensation de poly(acides carboxyliques) de poids moléculaires élevés et d'alcools polyfonctionnels, d'alcanolamines, ou d'amines polyfonctionnelles.

2. Plaques suivant la revendication 1, qui, par rapport au poids total, contiennent 0,5 à 15% en poids de produits de condensation de poly(acides carboxyliques) de poids moléculaires élevés et d'alcools polyfonctionnels, d'alcanolamines, ou d'amines polyfonctionnelles.

3. Plaques suivant la revendication 1 ou 2, qui contiennent des produits de condensation du genre de ceux pendant la réaction de condensation desquels on met en oeuvre les poly(acides carboxyliques) de poids moléculaires élevés et les alcools polyfonctionnels, les alcanolamines, ou les amines polyfonctionnelles, en proportions telles que le nombre de fonctions acides est équivalent au nombre total de fonctions hydroxyle alcooliques et de fonctions amine.

4. Plaques suivant l'une quelconque des revendications 1 à 3, qui contiennent les produits de condensation de poly(acides carboxyliques) polymériques du genre de ceux qui contiennent, incorporés par polymérisation, au moins 5 et cependant moins de 50% molaires, par rapport aux monomères constituant les poly(acides carboxyliques) polymériques, de monomères qui contiennent un radical carboxyle.

5. Plaques suivant la revendication 4, dans lesquelles les poly(acides carboxyliques) présentent une valeur K de 50 à 100 dans le diméthylformamide à 25°C.

6. Plaques suivant les revendications 1 à 5, qui contiennent les produits de condensation de poly(acides carboxyliques) de poids moléculaires élevés et de polyalcools polymériques du genre de ceux dont la valeur K à 25°C dans le diméthylformamide varie de 40 à 80.

7. Plaques suivant les revendications 1 à 5, qui contiennent les produits de condensation de poly(acides carboxyliques) de poids moléculaires élevés et du triméthylolpropane, de la glycérine, du 2-hydroxyméthylbutanediol-1,4, de la diéthanolamine, de la triéthanolamine, de l'éthylènediamine, ou de la tétraméthylènediamine.

8. Plaques suivant l'une quelconque des revendications 1 à 3, qui contiennent les produits de condensation de poly(acides carboxyliques) polymériques du genre de ceux qui contiennent, incorporés par polymérisation, au moins 50% molaires de monomères qui présentent un radical carboxyle.

9. Plaques suivant la revendication 8, qui contiennent les produits de condensation de poly(acides carboxyliques) polymériques du genre de ceux dont les sels de sodium possèdent une valeur K de 90 à 130 dans de l'eau à 25°C.

10. Plaques suivant la revendication 9, qui contiennent des produits de condensation du genre de ceux dont leur composant alcoolique est le triméthylolpropane, la glycérine, ou le 2-hydroxybutanediol-1,4.

11. Procédé de fabrication de plaques suivant les revendications 1 à 10, caractérisé en ce que l'on ajoute d'abord par mélange mécanique aux matériaux synthétiques ou naturels, finement divisés, un mélange aqueux qui contient au moins un poly(acide carboxylique) de poids moléculaire élevé et au moins une amine polyfonctionnelle, une alcanolamine, ou un alcool polyfonctionnel, à titre de liant, puis on sépare le liant excédentaire, on moule la masse formée et on la sèche ensuite à une température de 100 à 250°C.

12. Procédé de fabrication de plaques suivant les revendications 1 à 10, caractérisé en ce que l'on revêt des plaques de base, qui sont constituées de matériaux naturels ou synthétiques, finement divisés et de liants, d'un mélange aqueux contenant au moins un poly(acide carboxylique) de poids moléculaire élevée et au moins une amine polyfonctionnelle, un alcanolamine, ou un alcool polyfonctionnel et on les sèche ensuite à une température de 100 à 250°C.

13. Utilisation des plaques suivant l'une quelconque des revendications 1 à 10 ou fabriquées par mise en oeuvre des procédés suivant l'une quelconque des revendications 11 et 12, à titre de plaques de couverture.
